# DEMANDE DE BREVET EUROPEEN

(11) **EP 1 926 043 A1**
(43) Date de publication de la demande: **28.05.2008**
(21) Numéro de dépôt: 06386038.1
(22) Date de dépôt: 27.11.2006
(51) Int. Cl.: G06Q 20/00, G07F 7/02

(54) **Traitement des pièces de monnaie lors des paiements par l'emploi d'une carte**

(71) Demandeur: Grigorios, Kartasis, 551-32 Hellas, Thessaloniki (GR); Basiliki, Bakatsi, 551-32 Hellas, Thessaloniki (GR)
(72) Inventeur: Grigorios, Kartasis, 551-32 Hellas, Thessaloniki (GR); Basiliki, Bakatsi, 551-32 Hellas, Thessaloniki (GR)
(74) Mandataire: Müller, Gerald Christian

(57) **Abrégé**

Un traitement continu, de pièces de monnaie, que avec la contribution d'un régulateur « lorsqu'il découlera un blocage, d'une fréquence rare », le consommateur, qui sera présent, toujours devant la caisse, contrôlera et décidera pour le déblocage, par le ou la caissier et continuera ses actions quotidiennes pour ses achats.

Le résultat de ce traitement, parmi d'extensions nombreuses et importantes de son utilité, pour les citoyens d'un pays, il apportera encore : a) un profit pour les enfants, que UNICEF protège, avec le concours d'une nouvelle carte plastique, pendant les provisions des consommateurs: b) surtout aussi le gain d'un temps et pour tout les deux qui collaborent devant une caisse, grâce au «nouveau» traitement, de pièces de monnaie... «sans pièces de monnaie», via une coopération dialogique, amicale et confortable, parmi deux travailleurs qui sont :(le consommateur et le caissier), qui collaborent, presque journalier, l'un devant l'autre, chacun pour sa famille.

## Description

Un traitement des pièces de monnaie parmi deux «limites» exclusivement que nous déterminons, et qui jusqu'à leur limite deuxième qui est la supérieure définissent un paiement transactionnel par des pièces de monnaie.

Ce traitement vise à l'exemption des consommateurs par des pièces de monnaie et à des extensions des profits, que sa mise en oeuvre elle apportera et à des catégories spéciales de consommateurs.

Nous précisons dès le début, que le traitement proposé ne concerne pas et n'est pas étendue aux billets, dont la grandeur des montants (valeurs), durant leur négociation, suive un ordre de grandeur régulier, consacré, dans la plupart des pays, pour le paiement ou le renversement d'une valeur, à bref délai en billets.

Dans les exemples que nous mentionnerons, nous soulignons seulement le traitement des pièces de monnaie afin qu'ils sont rangés leurs détails en pratique.

Nous expliquerons aussi, que le traitement sus- mentionné n' a aucun rapport avec les méthodes arrondissements utilisées par les entreprises commerciales ou publiques, pour des raisons d'évaluation, financières, ou pour la démonstration de la qualité des services offerts à leurs clients.

Notre proposition crée une relation différente, (dialogique service) avec le portefeuille du consommateur, qui diffère de celle des crédit cartes dont leur administration est d'habitude régie, par des filiales de Banques, et qui sont impersonnelles, quant à leur usage.

Notre proposition se réfère à la pratique journalière d'approvisionnement des besoins immédiats du consommateur pour sa vie. Elle se réfère aux transactionnel actes, très fréquentes, journalières, d'approvisionnement du consommateur, qui le plus souvent impliquent pièces de monnaie et billets dans leur totalité et elle n'intervient jamais, si la totalité des achats du consommateur est réglée (seulement) avec des billets.

Le traitement de pièces de monnaie que nous proposons, (à condition qu'a été introduite, à une calculatrice «enregistreuse», la carte plastique de propriété de l'UNICEF, que le consommateur livrera au caissier), après l'enregistrement du total de paiement, formera la somme payable par le consommateur, exclusivement à des billets de banque. Le traitement de pièces de monnaie n'interviendra jamais dans la politique pour des ventes, du caisse X.

Ainsi, avec la déposition d'une valeur en 5€ d'unités entières, dans un compte, de garantie par le consommateur, (en garantie d'observation des conditions) qui sont stipulées par un simple contrat, son compte «débiteur» sera exclusivement en mouvement entre deux limites :a) de la limite supérieure de 4,99€ et de la limite inférieure de 0,01€ qui auront (toujours) un rapport direct seulement avec la partie de la valeur échangeable de ses achats par de pièces de monnaie (selon notre proposition). Nous précisons que l'identité du déposant et bénéficiaire de la somme des 5€ de la garantie, n' ont aucune relation avec la surface économique du déposant, ou de son âge.

Chaque dépassement des limites que nous avons défini, sera réglée immédiatement, (durant la transaction) par un billet, afin que le «débiteur» compte du consommateur se trouve toujours entre les deux limites que nous avons détermine. Il n est pas nécessaire que ce billet soit le plus petit, de la série des billets, mais ce sera dépendra de la valeur total versée, dans chaque provision des articles d'alimentation du consommateur.

L'action de chaque approvisionnement du consommateur sera élaborée dans le cas seulement que, au total payable de chaque déterminé action d'approvisionnement, interviennent des pièces de monnaie.

A notre proposition il ne termine pas (il ne ferme pas), une action quotidienne pour la provision des denrées de consommation courante par un consommateur, avec l'usage de son compte spécial pour des pièces de monnaie.

Chaque nouvelle action d'achat du consommateur va continuer à changer «toujours», le reste de son compte débiteur seulement dans la plus petite ou plus grande limite que nous avons déterminée. Notre traitement ne interviendra pas aux actions qui sont menés exclusivement par des billets de banque.

Le consommateur la preuve de son achat, «doit maintenir et contrôler», jusqu'à ce qu'il prenne la prochaine et qu'elle est indispensable, parce que, ce même le consommateur est l'auteur et le contrôleur des sommes concernées de la valeur de ses choix et du reste de sa dette. Simplement, nous rappelons que «consommateur», il est la personne qui utilise des achats pour la satisfaction de ses besoins, indépendamment de son métier.

Notre pétition ne permet pas le traitement des pièces de monnaie hors de deux limites et les deux stops que nous avons déterminé.

--L'algorithme est composé de trois indépendantes «sub-routines» :
«A» la première «sub-routine» est activée dès que le total de la valeur échangeable est calculé après un achat de produits de consommation par une machine de caisse.
«B» la deuxième « sub-routine» est activée dès que le consommateur déclare qu'il accepte l'existence d'une garantie spéciale - au traitement de la valeur ses provisions et il a déposé la somme de 5€.
«C» la troisième «sub-routine» est activée dès que le consommateur déclare qu'il suspend la garantie.

A la base de données du traitement nous introduirons quatre nouveaux champs.
A) le premier champ qui est « le champ numérique », contiendra les comptes spéciaux des consommateurs et le résultat (le reste) de la dernière opération de la marché ou du retour à des sommes des monnaies métalliques seulement, qu'ils sont en rapport avec les limites et les barrières que nous avons posées.
   Les limites seront 0,01€. La plus petite et 4,99€ la plus grande.
   Les barrières seront 0 la plus petite et 5€ la plus grande.
B) le champ « champ logique » déterminera une garantie spéciale, d'une valeur de 5€ non négociable à des actions d'échanges, et il déterminera, si le consommateur, a ou non déposé cette valeur qui apparaîtra avec les mots en rapport : vrai ou faux.
G) à le champ, sera enregistré la somme totale du reste débiteur, de tous les comptes des consommateurs de cette application.
D) à le champ sera enregistré la somme totale de dépôts de garanties, afin qu'il existe un contrôle direct.

« Etant donné que la plupart des éléments de données dans l'algorithme sont formulés par des termes qui sont spécialisés à la langue anglaise, nous utilisons cette langue à cette partie de notre proposition, de façon que le texte de l'algorithme d'être plus fidèle, comme nous espérons».

```
 BEGIN Subroutine A
 Sub SplitNumber(V, V1, V2, R) remark: auxiliary subroutine
 Remark V =number to be splitted
 Remark V1=integer part
 Remark V2=decimal part
 Remark R=last digit of integer part
   V1 ← Int(V)
   V2 ← V - V1
   s ← Trim(Str(V1))
   s ← Right(s, 1)
   R ← Val(s)
 End Sub
 
 BEGIN Subroutine A REMARK :MAIN Subroutines
 V ← TOTAL remark: the exchange value of consumables
 agora = {Customer Buy} remark: TRUE if not returning products
 READ [Special Guarantee] remark: using the consumers CARD
 IF not [Special Guarantee]= TRUE THEN exit subroutine
 UR ← [Debit Balance] rem: from Database using the consumers CARD
 SplitNumber V, V1, V2, M remark Calling auxiliary subroutine
 If (V2 = 0) And (M = 5 Or M = 0) Then
  Message "Processing not necessary"
  Exit Sub
 End If
 If agora Then V ← V + UR Else V ← V - UR
 If V < 0 Then
    V ← -V
    agora ← Not agora
 End If
 SplitNumber V, V1, V2, M
 If (V2 = 0) And (M = 5 Or M = 0) Then
  If {Customer Buy} Then
    V ← V + 0.01
  Else
    V ← V - 0.01
  End If
  Message "give customer BONUS ITEM ! "
 End If
 If V < 0 Then
    V ← -V
    agora ← Not agora
 End If
 SplitNumber V, V1, V2, M
 If M >= 5 Then
    V2 ← V2 + (M - 5) V1 ← V1 - (M - 5)
 Else
    V2 ← V2 + M V1 ← V1 - M
 End If [Sum Debit Balance] ← [Sum Debit balance] - UR
 If agora Then
    UR ← V2
 Else
    UR ← 5 - V2 V1 ← V1 + 5
 End If
 If {Customer Buy} Then
  Message "customers Payable amount=" ,V1 , "Debit balance=" & UR
 Else
  Message " customers receivable amount=" , V1 ,"Debit balance=" &
 UR
 End If
 [Debit Balance] U ← R remark: Write Data Base
 [Sum Debit Balance] ← [Sum Debit Balance] + UR
 BEGIN Subroutine B
  READ [Special Guarantee] remark using the consumers CARD
  IF [Special Guarantee] = TRUE THEN
      PRINT " Special Guarantee has already been paid"
  ELSE
   [Special Guarantee] ← TRUE [Sum Special Guarantee] ← [Sum
 Special Guarantee] +5
     [Debit Balance] ← 0 remark: Update Database
   END IF
 END Subroutine B
 BEGIN Subroutine C remark: called with password protection
   READ [Special Guarantee] remark using the consumers CARD
   IF [Special Guarantee] = TRUE THEN
       PRINT "Return" 5-[Debit Balance] [Sum Special Guarantee]
 ← [Sum Special Guarantee] - 5
   ELSE
      PRINT "Special Guarantee has not been paid"
   END IF
 END Subroutine C
 BEGIN Subroutine C // remark: called with password protection
   READ [Special Guarantee] // remark using the consumers CARD
   IF [Special Guarantee] = TRUE THEN
       PRINT "Return" 5-[Debit Balance]
   ELSE
       PRINT " Special Guarantee has not been paid"
  END IF
 END Subroutine C
```

Le ou La caissier/e seront les premiers à être soulagés par l'absence des pièces de monnaies avec les consommateurs étant les deuxièmes.

Nous pourrions définir quelques autres limites, par exemple les limites des 0,01€ et 9,99€ ou les limites des 0,01€ et 19,99€, ou 0,01 et 99,99€, ou d'autres limites qui s'approchent des proportions billets et dès que le consommateur dépasserait leurs limites respectifs, il verserait la respectif du surcroît, ou des montants respectifs ou des les encaisser. Mais dans ce cas, nous aurions une « activité mixte»: monnaies, qui est relative aux actions commerciales, qui n'ont aucune place dans notre proposition.

Pendant l'opération du traitement suggéré, il est évident que non seulement le consommateur et le ou la caissier (travailleur salarié) participent, mais aussi l'intervention d'une carte plastique, comme elle est enregistrée à la troisième ligne de l'algorithme.

Cette carte sera à la diligence de Unicef, à qui seront délégués tous nos droits, du moment qu'ils seront brevetés.

A la suite, nous allons mentionner, en bref, pourquoi nous avons fait ce choix de UNICEF. Il est vrai que cette service des consommateurs, que nous proposent, peut se faire réalisable, par l'assistance des moyens électroniques modernes, qui caractérisent notre époque.

En plus, il est événement que dans le secteur des télécommunications en particulier, ce renversement des moyens de communication anciens a vraiment impressionné même les personnes les plus conservatives. Donc, cette facilité avec les communications sans fil, a mis à part, le courrier postal traditionnel.

Il est sans doute que les revenus les plus importants que Unicef avait, il était d'origine par l'envoi des cartes postales, qui comme c'est évident, sont essentiellement diminuées. Notre projet essaie à diminuer cette perte des revenus de Unicef, via en même temps, un service simultané en faveur des consommateurs et surtout des travailleurs,
aux caisses de transactions, que la majorité du personnel sont des femmes, par lesquelles on demande en même temps de maintenir et....la source de la perpétuation du genre humain.

Par une déclaration sur honneur que nous allons envoyée, nous déclarons, en avance, l'octroi spécifique de nos droits, si cela arrive, de façon catégorique.

Le renforcement de l'assistance sociale en faveur de UNICEF, qui sera découlé par l'application, elle ne constitue pas une action de commerce, mais une contribution compensatoire en faveur de cette Service, qui est ...victime d' inondation, par des vagues sans cesse de la nouvelle technologie. Il est fait, que le transport des informations, par de parents et par d'amis, avec les moyens techniques et modernes est plus rapide et pour cette raison, ces envoyeurs ont remplacé les cartes postales de voeux, par téléphone ou encore par des messages télévisuels. Sans aucun frais sur le consommateur nous croyons que lui-même va pousser le canot d'une attente vers ces enfants de UNICEF qu'ils ont besoin.

Même le demandeur (l'un de deux commun demandeurs - indépendants personnes) Grégoire Kartasis va déléguer tout droit (dérivé par le Certificat du Modèle d'utilité délivré par le O.B.I. (Organisme de la Propriété Industrielle) sous le numéro 2002538 et qui est valide jusqu'au 30-12-2010), à Unicef.

L'utilisation de la «carte plastique qui porte un dessin en relief palpable» n'engage pas l'utilisation libre de n'importe quelle carte plastique conceptualisée par UNICEF, malgré le fait que la carte que nous avons susnommée, a été dessinée pour de personnes ayant des besoins spécifiques de façon qu'ils aient eux -mêmes facilement un accès a l'utilisation des cartes de crédit pour couvrir les provisions de ses besoins.

Il faut noter que l'acceptation officielle par l' Etat de Grèce que UNICEF sera exempté de toute imposition, est enregistrée à des documents officiels.

Nous avons à notre disposition des copies de lesdites pièces.

### « Application »

Les exemples que nous y citons résultent par utilisation de algorithme, mais et à une disposition du programme basic, de manière qu'il fait apparaître les pas d'opération du système plus représentativité.

Nous n'intervenons pas, par des billets aux exemples ci-dessous, afin que souligner les détails de leur mouvement des pièces de monnaie. Supposant que toutes les conditions pour l'introduction du « X » consommateur au programme des pièces de monnaie ont été respectées et le consommateur a signé le formulaire relatif et a déposé la garantie exclusivement de « 5€ » et a reçu la carte plastique de UNICEF à qui sont enregistrés même les éléments numériques de sa carte d'identité.

De cette façon le compte « débiteur» est activé avec la moindre valeur d'achat d'un 0,01€ que son relatif pièce de monnaie circule à la zone d'euro et le/la caissier est obligé, suivant la pratique, de l'accepter en charge du compte du consommateur, tant que le prix d'une valeur des Provisions/achats, or en tant que d'un cadeau.

Cette activation est nécessaire, du moment que le « X » consommateur n'utilise pas « son compte débiteur» le même jour, et sur son compte apparaît le montant du zéro « 0», qui ne représente (corresponde) à un monnaie de la valeur échangeable (d'échange) et pour cette raison, il ne est pas acceptable, à notre proposition.

Le consommateur « x », le jour suivant utilise le dédit de son compte. C'est-à-dire, il s'agit d'un traitement ininterrompue, comme le sont les besoins du consommateur pour sa conservation en vie. Ce rappel de la solde du bilan serait possible avec une pièce de monnaie des 2€, mais dans ce cas nous aurions restitué la transaction avec billets que notre proposition pose à la marge.

### PLAN LINÉAIRE

Valeur de l'achat = 3,55€ Reste, du compte débiteur antérieur =0,01€ Valeur PAYABLE = 0
Nouveau reste, du compte débiteur = 3,56€
Numéro de code 1

Valeur de l'achat = 1,15€ Reste, du compte débiteur, antérieur = 3,56€
Valeur PAYABLE = 0
Nouveau reste, du compte débiteur = 4,71€
Numéro de code 1
Valeur de l'achat = 2,25€ Reste, du compte débiteur, antérieur = 4,71€
Valeur PAYABLE = 5€
Nouveau reste, du compte débiteur = 1,96€
Numéro de code 1
Valeur de l'achat =3,03€ Reste, du compte débiteur antérieur =1,96€
Valeur PAYABLE = 0
Nouveau reste, du compte débiteur =4,99€
Numéro de code 1

Ainsi par la formation du montant à payer, par versement à billet, « non exclusivement par un billet de 5€», qui concerne « seulement notre exemple», se réalise proportionnellement au montant mixte du « total» du paiement du consommateur. C'est-à-dire que ça pourrait être un billet d'une autre valeur nominale, sans égard à l'ordre, par exemple 20^{€} or 50€ or 100€ etc. De cette façon, automatiquement le solde du compte de la dette des pièces de monnaie du consommateur sera introduite et sera formée dans ses limites acceptables, que nous avons fixé, comme aussi le solde du débit dans notre exemple, c'est-à-dire la somme de 1,96€ est correct et acceptable.

Le consommateur continue ses achats prochains en conservant le reçu de caisse, que chaque consommateur doit conserver et contrôler, pour plusieurs autres raisons.

Le mot « valeur échangeable» peut incommoder, mais il est nécessaire pour éclaircir le genre d'opérations arithmétiques que nous traitons.

Il n'est pas futile de rappeler que les monnaies euro n'interviennent dans des opérations arithmétiques abstraites générales, mais elles traitent et pointent des valeurs échangeables réelles pour les consommateurs.

Ce même traitement continuera aussi lors de la restitution ou l'annulation d'un approvisionnement du consommateur.
Cette fois-ci, notre exemple concerne les opérations des provisions du consommateur contre pièces de monnaie «et» billets.

Valeur de la rentré =27,50€ Reste, du compte débiteur, antérieur =3,35€
Valeur à ENCAISSER=25€
Nouveau reste, du compte débiteur =0,85€
Numéro de code =2
Valeur de la rentré =27,50€ Reste, du compte débiteur antérieure = 0,01€
Valeur à ENCAISSER =30€
Nouveau reste, du compte débiteur =2,51€
Numéro de code =3

De cette façon là, se traitent les pièces de monnaie « tout le temps» et libèrent les mains du consommateur et en particulier du /de la caissier/caissière, par votre médiation. Les extensions des résultas par ce traitement des pièces de monnaie contribue, (par voie de Unicef), même à la protection des petits enfants, aux régions géographique du sud de l'Afrique et de l'Asie dont la plupart d'eux, en tant que papillons, dès qu'ils viennent en contact avec la lumière du jour, ils exténuent leur vie éphémère.

Suivant l'ordre d'insertion d'un consommateur au système proposé des pièces de monnaie pour la provision des produits de consommation, les actions mentionnes ci-dessus seront appliquées et répétées en concentration : A) le consommateur sera le titulaire de la carte plastique proposée, sous une forme déterminée et administrée par Unicef. B) Le consommateur doit payer la somme de garantie 5€, en tant que « garantie du respect des termes». C) Le consommateur après avoir signé un contrat simple du respect des instructions du contrat et avoir procédé à l'activation de son compte débiteur même par une provision typique de 0,01€, ou bien, chose la plus habituelle, avoir procédé à un achat des produits de consommation le même jour, de façon que son compte « débiteur » soit activé. D) Dans le cas plus rare que son compte « débiteur » par la provision des achats ou des retours, résulte à un ensemble 5€, le consommateur sera informé qu'il va être chargé automatiquement avec la valeur d'échange 0,01€ contre réception un petit cadeau, de façon que son compte débiteur soit évité le premier stop, lequel de toute façon soit hors limites que nous avons déterminé et qui sont les seuls à être élaborés par notre proposition. De cette manière le travail du/de la caissier/caissière soit facilite pendant les provisions du consommateur X. Il est évident qu'à toute opération suivante effectuée par le même consommateur on ne effectuera la procédure susmentionnée de son insertion, dans le système «Un traitement des pièces de monnaie.

Pour le continu service du consommateur ne sera déterminée aucune limite de temps car l'élaboration proposée est une élaboration continue, qui «se renouvelle automatiquement» par le mode de son opération. L'éventuelle annulation de la carte- compte débiteur du consommateur sera effectuée après avoir précédemment, il a été informé par une imprimée feuille des instructions.

Autres termes et contrôles: Le respect des termes d'un contrat simple, qui va être signé par le consommateur de façon que les sommes et les additions des pièces de monnaie qui restent dans l'archive, elles vont circuler en continu et exclusivement dans les limites 0,01€ - 4,99€ que nous avons posées. Ces pièces de monnaies elles correspondront, toujours, avec les valeurs d'échange des provisions du consommateur, ainsi que leur retours ou bien les annulations de leur prix payé qui seront sous le contrôle continu des opérations exécutées. La somme de 5€ sera obligatoire, « en tant que garantie exclusivement du compte « débiteur » du consommateur, dont son mouvement sera dans les limites susmentionnées. En plus il sera obligatoire le contrôle de la carte d'identité du consommateur au moment de la réception de la carte UNICEF ainsi que la signature d'un contrat régulier, pour vérifier l'acceptation des termes d'opération, quand le consommateur interrompe sa participation et retire la somme de sa garantie.

Pour la clôture du compte du consommateur, qui sera effectuée après la vérification des éléments de sa carte d'identité, est prévu un code d'accès, pour que le compte de sa garantie soit payé et que la différence à recevoir entre les deux sommes (garantie - moins reste débiteur dans l'archive), par le consommateur - bénéficiaire.

Le consommateur a le droit d'interrompre le mouvement de son compte. Les extasions d'utilité de notre proposition contribueront à des divers secteurs de la subsistance du consommateur et de sa famille; aussi avec sa contribution à des personnes ayant des problèmes de vision, à la mobilité, à l'augmentation des naissances :(ils sont connus les problèmes de la dénatalité qui envisagent les Pays ...Développés). Encore à la gestion de l'argent au secteur public. Aussi à l'éducation et à l'introduction des personnes âgées à de nouveaux données du « traitement » facile du contenu de leur poche, en utilisant des moyens de technologie nouvelle. Même la moindre aide aux actions de UNICEF pour les jeunes consommateurs, « si one peut les nommer des consommateurs », pour qui cet organisme international essaye d'offrir. Tout ce qui précède, il est un exemple des extasions de l'utilité de notre proposition.

### Consommateur - Caissier.

De quelle façon notre proposition contribuera au travail, ou plutôt, à la coopération, les deux ci - dessus? Nôtre proposition contribuera à une diminution du temps d'un travail, qui est parfois nerveux, (surtout pour le /la caissier);-
A) une abréviation du temps pour la réalisation d'un acte d' approvisionnement des articles d'une consommation courante et très fréquente du consommateur pour l'acquisition de ses besoins alimentaires, et en même temps une aide au travail, du ou de la, caissière, dont la présence est nécessaire, pour ces opérations concrètes.
B) amélioration de la façon d'exécution, des ci - dessus d'opérations fréquentes, avec une façon plus amicale et plus facile, pour les deux personnes qui contractent directement à un acte d'une transaction (d'argent comptant) a la caisse.
C) Tandis que notre proposition concerne aux achats des consommateurs, d'argent comptant, il est évident que l'argent il faut que se trouve dans la poche du consommateur, indépendamment qu'ils soient: seulement des billets, ou encore avec des monnaies métalliques.
   Vu que à cette action du consommateur, le control, à son portefeuille, est rapide et ...visible, il commande une influence à la décision du consommateur et le déconseille à des extensions ses achats alléchants au-delà de ses possibilités.
   De cette façon la consommation n'est pas modifiée à surconsommation que les défis modernes de la richesse pousse le consommateur.
D) Une habitude, sans risques substantiels à l'utilisation des moyens de la technologie moderne, par de jeunes personnes et par de personnes trop âgées, qui au - delà de leur familiarité avec les nouvelles données de notre époque, aideront inconsciemment à la réduction un désagrément à les autres consommateurs, qui attendent à la queue devant la caisse, pour leurs achats.
E) La dernière particularité de notre proposition, est «notre offre»: (c'est-à-dire, la concession de nos droits, puisque notre demande aura la possibilité d'obtenir votre approbation), vers les enfants que protège UNICEF, avec l'utilisation, une carte plastique, qui sera propriété de cet Office, pour des achats exclusivement, par des consommateurs, comme nous avons détermine. De cette façon la circulation de cette carte contribuera à l'expédition d'un résultat, comme nous attendons, au bénéfice de ces enfants que protége UNICEF, au bénéfice des consommateurs, au bénéfice de travailleurs aux caisses.

Si nous mentionnerions plus en détail, tous les influences de l'application de cette proposition, à tous les secteurs de la vie sociale du consommateur, qui habituellement, ces secteurs sont résumés aux divers services des ministères d'un gouvernement, il aurait nécessaires, pour une telle analyse détallée, plus de cent pages afin que nous les avons enregistré. Il est possible de cette façon que nous avions mieux formés l'écriture.. au dialecte français que nous essayons de faire maintenant dans cette proposition.

En dehors de la diminution du temps du travail, ce traitement mentionné, elle provoquera encore un résultat d'une coopération, moderne, amicale pendant de relatives transactions. Ce sera le résultat de l'application de notre proposition, en pratique, sans aucune charge sur le compte «débiteur» du consommateur.

Sans doute, une surcharge, par d'intérêts débiteurs sur le compte «débiteur» du consommateur, aura découlé, via l'addition de sommes des pièces de monnaie qui circulent continuellement, dans son compte à l'archive, entre les deux limites que nous avons déterminé. Mais une semblable surcharge sur le compte débiteur du consommateur est catégoriquement inacceptable à notre proposition.

De façon que nous avons empêché, une probabilité d'exploitation des consommateurs par d'artifices commerciales, le programme du traitement des pièce de monnaie, comme il est réglé par le programme de l'application que nous propose, ne permet pas la conservation, dans l'archive, l'analyse des actions de comptes spéciaux des consommateurs, hors d'une action, la dernière action seulement, par les achats ou les retours, dans chaque différent archive des consommateurs.

La information, c'est-à-dire que la conservation de la dernière preuve toujours par le consommateur, que nous avons répété souvent, elle apportera, en dehors, de la simplification du travail du caissier et une grande compression á l'archivage de actions pour alimentation des consommateurs. I'information au contraire, d'une liste des choix du consommateur est un peu dangereuse, en cas d'une perte, par hasard de sa carte de Unicef.

En ce qui concerne le service du caissier, existent à l'algorithme les instructions correspondantes, pour la réception de contrôles synoptiques par les deux archives.

### Comme une introduction à part technique

Un traitement des actions d'échange par différentes pièces de monnaies exclusivement, (via des actions des additions et soustractions seulement et avec exclusion des actions de multiplication et de division dans l'archive des pièces de monnaie, comme nous avons fixé). La valeur des différentes pièces de monnaie, n'est pas indéfini, mais concrète. La valeur cumulative, par de pièces de monnaie, ou et comme une seulement valeur, jusque aux limites mise en pratique, a une relation déterminative avec notre choix des limites d'une application pour des pièces de monnaie, avec les nouveaux renseignement techniques.

Les différents prix - (de valeurs) des pièces de monnaie pendant leur emploi à des actions pour traitement, détermineront toujours une valeur d'échange, ou même un ensemble de telles valeurs.

Le calcul de la justesse de l'ensemble payable, par le consommateur, ne sera pas contrôlée, par le traitement, parce que ce contrôle se réalise sous la responsabilité du consommateur, et avec clarifications lorsqu'il est nécessité, par le/la caissier. Le traitement néanmoins va contrôler seulement la somme entrée à l'« archive déterminée des pièces de monnaie», qui probablement peux entrer même et le maximum ensemble acceptable dans celui-ci: 4,99€ à une et seulement action de l'échange.

En moyenne les actions d'échange, dans les limites de l'archive, qui automatiquement seront renouvelés, sous responsabilité d'observation des termes du traitement par le consommateur, seront approximativement trois échanges.

La somme débitrice la plus grande à la portion du consommateur ne dépassera pas jamais la plus grande valeur de la dette, qui est la somme 4,99€ et qui est garantie, ou la plus petite somme de la dette, vers en bas, (ne sera jamais 0), elle sera 0,01€.

La détermination de ces limites ci-dessus, ne est pas arbitraire, parce-que entre ceux-ci limites circulent de fait et sont négociables les monnaies métalliques.

Les pièces de monnaie, comme ils sont publiés par des catégories de valeurs ne sont pas de façon imprévue non plus indéfinie. Les catégories de l'ensemble de la publication des pièces de monnaie sont huit (8) : la première catégorie et de plus petite valeur de pièces de monnaie est:
0,01€ et il peut former avec la même valeur de pièces de monnaie, 499 valeurs différentes. La catégorie deuxième de la valeur des pièces de monnaie est 0,02€ et selon de même ordre de l'augmentation ou et de la soustraction valeurs différentes : 249, la troisième 0,05€ = 99, la quatrième 0,10€ = 49 la cinquième = 0,20 =24, la sixième 0, 50€= 9, septième 1€= 4 et la huitième 2€ =2. Il résulte ainsi, un plus grand nombre d'actes 499 de 0,01€ jusque'un plus petit nombre d'actes 2 de 2€.

Ces toutes concrets actions d'une valeur d'échange, ne sont pas des mathématiques théorique.

La simplification de l'ensemble d'un paiement, « à chacune action de fourniture » du consommateur, est exécuté par chaque enregistreuse et le versement de sa valeur d'échange est indispensable par le consommateur. Par ce point-ci, interviennent les diverses cartes de crédit qui facilitent le consommateur à sa celle-ci l'action, avec leur orientation commerciale. Par ce même point intervient, dans une seulement partie de la valeur payable par des pièces de monnaie exclusivement, le traitement que nous proposons des pièces de monnaie, dont son ou non orientation commerciale avec le nouvel élément inventif jugera votre Service.

Le placement des deux barrières ([stop] 0 et 5€), à des deux extrêmes ci-dessus valeurs concernées (0,01€ et 4,99€), auront protégé les limites (frontières), pour qu'ils empêchent les dépassements des limites, qui ne deviennent pas acceptables pour archivage et traitement, conformément aux termes que nous avons déterminé à notre proposition, pour le traitement des monnaies métalliques.

Les caractéristiques techniques de notre demande sont concentrées, sur les contrôles automatiques, que nous avons posé à la délimitation de quatre stops - limites, pendant le traitement des données numériques des pièces de monnaie : (via des additions - des soustractions dans l'archive des pièces de monnaie), de sorte que ces pièces de monnaie de ne interviennent pas pendant les transactions à la caisse, par des consommateurs.

Les stops sont : 0 et 5€. Les limites des pièces de monnaie sont : 0,01€ et 4,99€.

La limite 0,01€ aura l'instruction d'une intervention automatique, en tant qu'un « régulateur » pendant d'une violation, éventuelle, (bien que cette sera rare), qui pourrait avoir apparue aux stops: 0 et 5€, pendant la collaboration des additions ou des soustractions, des pièces de monnaie et en avant de la nouvelle introduction du résultat du traitement au archive des données chaque consommateur. Le régulateur susmentionné procédera automatiquement, à une rectification, (suivant toujours la valeur d'échange qu'elle représente), par un achat d'une valeur 0,01€ (comme cadeau) qui sera acceptable par le consommateur qui attend en face du caissier. Cette rectification, si qu'elle sera rare, pourtant elle est obligatoire, pour l'automatique circulation proportionnée, du compte débiteur du consommateur.

Ainsi chaque fois, par une nouvelle addition, ou par une soustraction des pièces de monnaie, aux limites acceptables, (plus grande ou plus petite) dans l' archive, ils ont dépassé les sommes - (limites) : 4,99€ ou 0,01€ vers au-dessus la première ou vers en bas la deuxième et apparaissent les sommes de « stops»: 5€ ou 0 (zéro), la limite 0,01€ interviendra, automatiquement, comme mandataire - corrigeur «régulateur», afin que le compte du consommateur ne s'acquitte pas. Il est évident que le consommateur même, à une telle circonstance, sera toujours présent, à la caisse.

A ce point de l'application de la partie technique de notre proposition, nous spécialisons l'inclusion de l'élément 0,01€, comme, un élément déterminatif, qui fixe, non comme un élément comptable d'une signification mathématique, mais comme un élément d'une valeur réelle d'échange, essentielle, parce que cette action et dans les deux cas, à la caisse, présuppose aussi la participation «la présentation» du consommateur, pour la livraison de la contre - valeur, cet à dire que cette action, n'est pas «une action comptable vague ».

Ainsi, l'intervention, du régulateur, lorsque elle est imposée, selon l'échange, est mentionnée à une action réelle, d'échange - transactionnelle et non à une action d'une signification mathématique - théorique.

Est-ce que, à une diminution du temps d'exécution d'un travail, pour la production d'un nouveau travail, ou même à une amélioration du travail, ne contribue pas le mode de la fabrication d'un élément nouveau d'une machine, ou la machine elle-même, qui sont jugés, pour un brevet ? Aucune loi n' interdit pas le consommateur qu'il paye avec « des pièces de monnaies seulement », l'ensemble de la valeur d'échange de ses fournitures.

Cependant qu'il en découle dans un tel cas d'une pratique, encore certains consommateurs utilisent, «heureusement rarement », cette possibilité, qui tourmente les caissiers et les autres consommateurs restants et qui suivent une priorité d'une attente devant les caisses.

Nous croyons donc, que notre proposition se traite une pratique contemporaine devant les caisses. Elle se trouve dans notre époque des vitesses, grâce au gain du temps du travaille, que sera obtenir, en faveur de la grande majorité des consommateurs et du/de la caissière en particulier. Le consommateur n'aura pas aucune charge supplémentaire, mais au contraire, comme nous avons mentionné à un autre point de notre proposition.

Les extensions de l'utilité de notre proposition, pourrait être fatiguant pour le X examinateur, étant donné qu'un employé d'une Service, n'a pas toujours le temps d'être informé sur toutes les difficultés que les âgés envisagent, mais même les jeunes consommateurs, leurs mères, dans tout cas particulier, pendant qu'ils fassent leurs provisions sur les produits de consommation qui sont nécessaires pour leur survie.

Notre proposition vise à un gain du «temps de la durée» des échanges qu'elles ont, d'habitude, une fréquence imprévisible, qui est dépendue par le nombre des consommateurs, à un moment du travail du caissier dans la caisse. Ainsi le/la caissier devienne parfois nerveux. Pourtant le/la caissier est obligé de garder toujours, la directive, qui détermine que : «le consommateur a toujours la raison». Sommairement, quel est 'objet du travail du/de la caissier a) le début du travail du caissier, présuppose toujours, une recette - et mesurage, qui contienne billets et de monnaies de pièce pour les échanges b) un mesurage encore des billets et des monnaies de pièce pendant livraison à la fin/du travail, qui est évident c) cependant, avant de la livraison du reste des billets et des monnaies de pièce, précède le contrôle, du compte de la gestion qui, parfois, a une grande durée. Cette diminution du temps d'exécution de ce travail contribuera à la qualité des échanges, à la simplification du travail et à une coopération plus confortable et pour les deux concurrent à la caisse.

Ce traitement dispense le consommateur par le fait, de faire négocier le contenu de sa poche.... avec le tiroir du caissier. Ainsi a) la limitation du temps de la transaction et pour les deux : (consommateur et caissier), qui sont les deux personnes, qui ont une collaboration journalière et b) le résultat d'une coopération plus amicale, express et moderne. Ceci sera le premier résultat de l'application de notre proposition en pratique, sans aucun charge pécuniaire pour le consommateur et même le contraire.

Les entreprises, (commerciales, industrielles, encore d' un intérêt public, en particulier), ont calculé les difficultés, pendant d' encaissement de leurs exigences, par des consommateurs et pour qu'elles évitent la médiation des pièces de monnaie, elles appliquent un arrondissement de la partie qui est mentionnée aux pièces de monnaie et en particulier aux deux ou trois premières unités avec décimales d'unité, qui habituellement les accompagnent. Ainsi, ces plus haut,entreprises déplacent le paiement des monnaies de pièce par les consommateurs, à le prochain paiement du consommateur, encore s'il sera réalisé, après des mois.

Encore, autres entreprises utilisent, (et en particulier pour les communications des consommateurs par téléphone), cartes d'une valeur diverse et avec une durée de temps, qui est déterminé, toujours d'avance, la terminaison de leurs usage. Cette tactique même est appliquée maintenant aux téléphones mobiles, qui ont prédominé, via leurs magasins de vente, avec de détails de ces appareils. Ces magasins de téléphones mobiles sont maintenant, plus nombreux de grands magasins des alimentations, (dans le quartier de la ville que nous habitons nous). Le moyen d'un paiement d'avance, s'applique aussi par des entreprises, pour les transports urbains qui utilisent des cartes payé d'avance et d'une somme et d'un temps de la consommation limité.

Tous ci-devant tactiques, concernent des actions qui sont caractérisés d'abord, par un profit commercial pour ces mêmes entreprises et parallèlement, une partie de profit de temps, qui le consommateur - (utilisateur) gagnera aussi, via de l'utilisation de ces cartes mentionnés, mais non, tout à fait gratuitement, et c'est évident.

Au contraire à notre proposition, le bénéfice, qui sera advenu par la diminution du temps, via de l'application du traitement des pièces de monnaie, sera entière en faveur/du caissier, du consommateur et en faveur des enfants, que UNICEF protège.

Le traitement de notre proposition, pour l'abstraction des pièces de monnaie, pendant des échanges, peut pendant son application d'être étendue, même, (via une caisse enregistreuse, que sera moderne), par des caissiers indépendants, dans de petits magasins, dans les quartiers d'une ville. Le bénéfice, ci-dessus, vers tous les portefeuilles des consommateurs, sera l'occasion, « pour une bonne offre réelle d'une service moderne ».

L'abréviation du temps, pour une saisie de données, à des archives, d'actes antérieur, simplifie le travail et pour les deux: (consommateur - caissier) et augmente le plus vite traitement des éléments dernier seulement, par les archives.

L'entretien de la preuve dernière de la caisse par le consommateur, révèle le contenu des pièces de monnaie,... au portefeuille vide des consommateurs, par des objets métalliques qui sont et lourdes, et que ne... seront pas localisés par de contrôles pointilleux à des aérodromes, mais aussi à des terrains d'athlétisme.

Notre avis est que, par la lecture de notre proposition, sera devenue perceptible sa différence, par d' actions des entreprises commerciales. L'usage de la carte spéciale de UNICEF exclusivement, a une relation dépendante par « la dimension sociale des recettes de UNICEF », en faveur des enfants qui protége, et comme nous apprécions cette dimension de ses recettes ne signifie pas : commerce, comme et les cartes postal de UNICEF.

Cette fiscale norme est consacrée, c'est-à-dire, que les indemnisations, qu' un Gouvernement octroie en faveur de victimes des inondations ne sont pas taxées.

D'accord avec la tactique de cette fiscale norme, il ne faut pas être considéré, commerce, un profit que UNICEF, (cette organisation international) aura le droit d'encaisser, via ses nouveaux cartes.

On peut nous faire la question : pourquoi les cartes postal, que UNICEF avais toujours le privilège à vendre, maintenant ont inondés? C'est un secret, qu'il est connue, à tout le monde, c'est-à-dire : que les ... vagues continues de la nouvelle technologie, ont bousculé vers le sable et ont enterré les carte postal par papier, et ils ont levé aux éthers les... vagues des téléphones sans fil, pour la transmission de voeux.

Mais il existe encore, le patron de la caisse, ou il est possible, ce lui-même caissier d'être le patron d'une entreprise.

Si on est un bon commerçant, il faut comparer les profits et les frais de l'opération d'une nouvelle activité. Mais, dans notre époque, il y a encore et « l'antagonisme pour le bonne image» d'une entreprise. L' antagonisme pour le bonne image sera l'élément déterminatif d'une décision, c'est-à-dire, si un commerçant soit décidé d'acquérir un neuf ou complémentaire armement, pour l'application de ce travail du traitement de pièces de monnaie.

Étant donné que chaque état presse les entreprises de son pays, de façon qu'ils fassent un renouvellement à leurs machines par un contemporain armement, nous estimons que cette directive n'est pas, en faveur de commerçants, mais finalement en faveur des consommateurs.

Nous estimons encore, qu'il ne est pas un bon raisonnement, ce raisonnement conformément auquel un propriétaire a décidé d' éradiquer un pommier, parce que un pomme par ses branches, s'est abattu dans un jardin étranger.

Nous avons l'impression qu' une autre proposition, «du traitement des pièces de monnaie» n'est pas nécessaire d'en formuler, de façon que cette même notre proposition, d'être étendu encore sur les autres pièces de monnaie qui circulent aux pays, et qui sont couverts par le brevet européen. Si une telle possibilité existe, nous proposons de sorte que ce traitement d'être étendu aussi sur les autres pièces de monnaie de ces pays, dont la parité monétaire supérieure, sera jusque le double de la valeur de plus 4,99€, ou sera jusque au demi de la valeur de 4,99€.

Nous plaçons plus bas la matérialisation de l'algorithme à la langue programmatique : «basic».

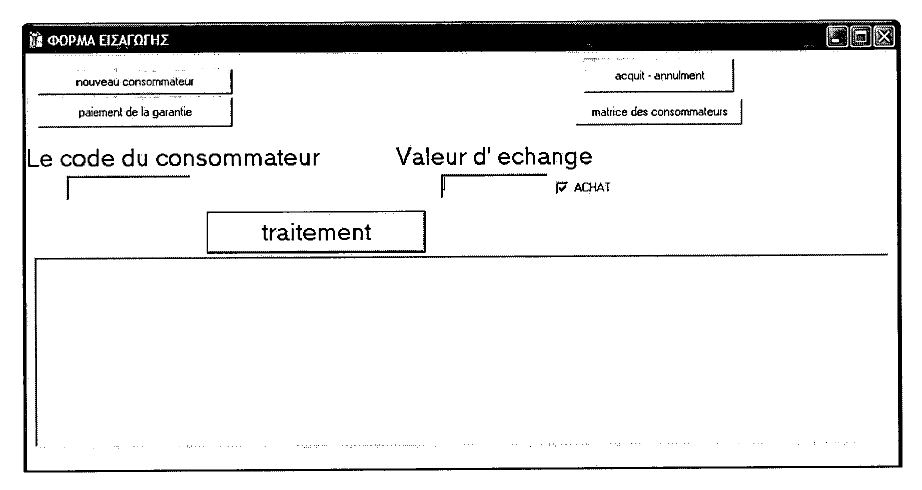

```
 Dim pelates As Database
 Function Ayjisi(ByVal x As Currency, ByVal y As Currency) As
 Currency
 Dim p As Currency, i As Integer, yy As Currency, xx As Currency
 Dim prosimo As Integer
 If Sgn(x) <> Sgn(y) Then
  prosimo = -1
 Else
  prosimo = 1
 End If
 yy = Abs(y)
 xx = Abs(x)
 x = 0: y = 0
 For i = 1 To 100
  x = x + xx
  y = y + yy
 Next
 
 p = 0
 While y > 0
   If Mesi(y, 1) <> Mesi(y, 0.1) Then
     p = p + x
   End If
   x = x + x
   y = Mesi(y, 1)
 Wend'End While
 p = miosi(p, 100, True)
 p = miosi(p, 100, False)
 If prosimo = 1 Then
 Ayjisi = p
 Else
 Ayjisi = -p
 End If
 End Function
 
 Function Mesi(ByVal y As Currency, ByVal Vima As Currency) As
 Currency
 Dim i As Currency
 For i = 0 To y Step Vima
  If i + i > y Then
   Mesi = i - Vima
   Exit Function
  End If
 Next
 End Function
 Function miosi(ByVal y As Currency, ByVal x As Currency, aker As
 Boolean) As Currency
 Dim d As Currency
 
 Dim prosimo As Integer
 If Sgn(x) <> Sgn(y) Then
  prosimo = -1
 Else
  prosimo = 1
 End If
 y = Abs(y)
 x = Abs(x)
 
 d = 0
 Do While y >= x
  d = d + 1
  y=y-x
 Loop
 
 If aker Then
  If prosimo = -1 Then d = -d
  miosi = d & ""
  Exit Function
 End If
 
 Dim d1 As Currency
 y = y + y + y + y + y
 y = y + y
 d1 = 0
 Do While y >= x
  d1 = d1 + 1
  y = y - x
 Loop
 
 Dim d2 As Currency
 y = y + y + y + y + y
 y = y + y
 d2=0
 Do While y >= x
  d2 = d2 + 1
  y=y-x
 Loop
 If prosimo = -1 Then d = -d
 miosi = Val(d & "." & d1 & d2)
 End Function
 
 Sub SplitNumber(ByVal V As Currency, V1 As Currency, V2 As
 Currency, R As Currency)
 V 1 = Int(V)
 V2 = V - V1
 Dim s As String
 s = Trim(Str(V1))
 s = Right(s, 1)
 R = Val(s)
 End Sub
 
 Private Sub arxikop_Click()
  Dim UR As Double, R As Recordset, p As String
  Set R = pelates.OpenRecordset("MHTRWO", dbOpenDynaset)
 
 p = Trim(PEL.Text)
 If p = "" Then
   MsgBox " ENTREZ LE CODE DU CONSOMMATEUR ", , "
 ATTENTION "
   Exit Sub
 End If
 R.FindFirst "[kwd_pel]=" & Chr(34) & p & Chr(34)
 If R.NoMatch Then
  R.Close
  MsgBox "LE CODE DU CONSOMMATEUR N'EST PAS
 CORRECT", , " ATTENTION "
  Exit Sub
 End If
 
 UR = R("XREWSTIKO")
 
 If Not R("EIDIKH") Then
  "**
  UR = 0.01
  rslt = " IL FAUX PAYER: 5€"
  rslt = rslt & Chr(13) & Chr(10) & " donnez lui:«BONUS item»"
  "**
  R.Edit: R("XREWSTIKO") = UR: R("EIDIKH") = True: R.Update
 Else
  MsgBox " IL A PAYE LA SOMME DE GARANTIE ", , "
 ATTENTION "
  rslt = ""
 End If
 
 R.Close
 
 End Sub
  
 Private Sub PEL_MouseMove(Button As Integer, Shift As Integer, X As
 Single, Y As Single)
 PEL.SetFocus
 End Sub
 
 Private Sub Synolo_MouseMove(Button As Integer, Shift As Integer, X
 As Single, Y As Single)
 Synolo.SetFocus
 End Sub
 
 Private Sub Ch_Click()
 If Ch.Value Then
 
  Ch.Caption = " ACHAT "
 Else
 
  Ch.Caption = " RENDUE "
 End If
 End Sub
 
 Private Sub epex_Click()
  Dim R As Recordset, V As Double, UR As Double, p As String
  Set R = pelates.OpenRecordset("MHTRWO", dbOpenDynaset)
 
 p = Trim(PEL.Text)
 If p = "" Then
   MsgBox " ENTREZ LE CODE DU CONSOMMATEUR ", , "
 ATTENTION "
   rslt = ""
   Exit Sub
 End If
 R.FindFirst "[kwd_pel]=" & Chr(34) & p & Chr(34)
 If R.NoMatch Then
  R.Close
  MsgBox " LE CODE DU CONSOMMATEUR N'EST PAS
 CORRECT ", , " ATTENTION "
  Exit Sub
 End If
 Dim L As Currency
 rslt = ""
 """"""""""""""""""""
  V = Abs(Val(inVal(Synolo)))
   GoTo Sosto
 lathos:
   MsgBox " numero tres large ", , " attention"
   On Error GoTo 0
   R.Close: Exit Sub
 Sosto:
   On Error GoTo lathos
   L = Ayjisi(V, 1000)
   On Error GoTo 0
   If miosi(L, 10, True) <> miosi(L, 10, False) Then
    MsgBox " La somme contienne des miliemes d'EURO", , "
 attention "
     R.Close: Exit Sub
   End If
  "**
   If Not R("EIDIKH") Then
      rslt = " LA GARANTIE N' EST PAS PAYEE "
      R.Close: Exit Sub
   End If
 
 """"""""""""""""""""""
 Dim V1 As Currency, V2 As Currency, M As Currency
 
 UR = R("XREWSTIKO")
 SplitNumber V, V1, V2, M
 If (V2 = 0) And (M = 5 Or M = 0) Then
  MsgBox " La somme n' a pas de pieces de monnaie ", , " attention "
  R.Close: Exit Sub
 End If
 Dim agora As Boolean
 
 agora = (Ch.Value = 1)
 
 If agora Then
  V=V+UR
 Else
  V=V-UR
 End If
 
 If V < 0 Then
  V = -V
  agora = Not agora
 End If
 
 SplitNumber V, V1, V2, M
 If (V2 = 0) And (M = 5 Or M = 0) Then
  If Ch.Value = 1 Then 'AGORA
    V = V + 0.01
  Else
    V = V - 0.01
  End If
  rslt = Chr(13) & Chr(10) & " BONUS item ! ! ! ! ! ! !!"& Chr(13) &
 Chr(10)
 End If
 If V < 0 Then
  V=-V
  agora = Not agora
 End If
 SplitNumber V, V1, V2, M
 If M >= 5 Then
  V2 = V2 + (M - 5)
  V1 = V1 - (M - 5)
 Else
  V2=V2+M
  V1 =V1 - M
 End If
 rslt = rslt & Ch.Caption & "=" & Synolo & ", reste debitant=" &
 R("XREWSTIKO") & Chr(13) & Chr(10)
 
 If agora Then
  UR = V2
 Else
  UR = 5 - V2
  V1 = V1 + 5
 End If
 If Ch.Value = 1 Then 'AGORA
  rslt = rslt + " PAYABLE EN BILLETS =" & V 1 & Chr(13) & Chr(10)
  -& " Nouveau reste debitant =" & UR
 Else
  rslt = rslt + "E I Σ Π P A K T E O =" & V1 & Chr(13) & Chr(10)_
  & " Nouveau reste debitant =" & UR
 End If
 R.Edit: R("XREWSTIKO") = UR: R.Update
 """""""""""""""""""""""
  R.Close
  rslt = rslt + Chr(13) & Chr(10) + " LE CODE DU
 CONSOMMATEUR==" & PEL.Text
  PEL.Text = ""
  Synolo = ""
  Synolo.SetFocus
  'PEL = ""
 End Sub
 Function inVal(ByVal s As String) As String
 Dim j As Integer
 
 For j = 1 To Len(s)
  If Mid(s, j, 1) = "," Then Mid(s, j, 1) = "."
 Next
 inVal = s
 End Function
 
 Private Sub ex_Click()
 Dim R As Recordset, p As String
 
 Dim psw As String
 psw = InputBox("Pasword", "**Password**")
 If psw <> "****" Then Exit Sub
 
 Set R = pelates.OpenRecordset("MHTRWO", dbOpenDynaset)
 
 p = Trim(PEL.Text)
 If p = "" Then
   MsgBox " ENTREZ LE CODE DU CONSOMMATEUR ", , "
 ATTENTION "
   Exit Sub
 End If
 R.FindFirst "[kwd_pel]=" & Chr(34) & p & Chr(34)
 If R.NoMatch Then
  R.Close
  MsgBox " LE CODE DU CONSOMMATEUR N'EST PAS
 CORRECT ", , " ATTENTION "
  Exit Sub
 End If
 If R("EIDIKH") Then
  rslt = "somme rendue au consommateur=(garantie[5]-" &
 R("XREWSTIKO") & ")=" & (5 - R("XREWSTIKO"))
 Else
  rslt = " le consommateur n a pas paye la garantie "
 End If
 R.Delete
 R.Close
 PEL.Text = ""
 
 End Sub
 
 Private Sub Form_Load()
  Set pelates = OpenDatabase(App.Path & "\pelates.mdb", False, False)
 End Sub
 
 Private Sub Form_Unload(Cancel As Integer)
  pelates.Close
 End Sub
 
 Private Sub li_Click()
 Dim R As Recordset, p As String
 Set R = pelates.OpenRecordset("MHTRWO", dbOpenDynaset)
 
 rslt = ""
 On Error Resume Next
  R.MoveFirst
  Do Until R.EOF
   If R("EIDIKH") Then
     p = " = " & R("XREWSTIKO")
   Else
     p = " =- - - - - -"
   End If
 
   rslt = rslt & Left(R("kwd_pel") & String(20, "."), 20) _
   & Left(R("onoma") & String(25, "."), 25) & p & Chr(13) & Chr(10)
 
   R.MoveNext
  Loop
  R.Close
 On Error GoTo 0
 End Sub
 
 Private Sub neos_Click()
  Dim R As Recordset, n As String, p As String
  Set R = pelates.OpenRecordset("MHTRWO", dbOpenDynaset)
  p = Trim(PEL.Text)
  If p = "" Then
    MsgBox " ENTREZ LE CODE DU CONSOMMATEUR ", , "
 ATTENTION "
    Exit Sub
  End If
  R.FindFirst "[kwd_pel]=" & Chr(34) & p & Chr(34)
  If Not R.NoMatch Then
   R.Close
   MsgBox " CET CODE DU CONSOMMATEUR EST DEJA
 EREGISTRE ", , " ATTENTION "
   Exit Sub
  End If
  n = InputBox("donnez vous le nom du consomateur ", " introduction du
 nom ")
  If n = "" Then
    R.Close
    Exit Sub
  End If
  R.AddNew
  R("kwd_pel") = p
  R("XREWSTIKO") = 0.01
  R("EIDIKH") = False
  R("onoma") = n
  R.Update
 
  R.Close
 End Sub
```

## Revendications

1. « Un traitement des pièces de monnaie parmi deux limites exclusivement » :
1) le consommateur, qui approuvera le service, avec d'argent comptant, mais sans des pièces de monnaie, il doit déposer, pour une fois, une « garantie » d'une valeur de 5€, exclusivement, après que précédemment il a appris la convenance de cette garantie, laquelle est indispensable à son compte « dû », qui sera circulé continuellement, « sans marges chronique pour son usage». Dans le compte du consommateur ils circuleront seulement les pièces de monnaie, qui ne interviendront pas, pendant les paiements d' achats au caisse, ou encore de retours et toujours, dans un total d'argent comptant, soit ce total est constitué, par des pièces de monnaie seulement, soit avec un total des billets de banque, devant une caisse de paiement, jusque à la limite supérieure de la dette, par de pièces de monnaie, exclusivement, qui est le total : 4,99€.
Le total dû, des 4,99€, il peux être formée par une marché ou par plusieurs marchés, par un consommateur (qui est la plus habituelle),
et sera renouvelée automatiquement, avec quiconque son dépassement qui sera payé avec billet de banque, exclusivement, à la caisse par le consommateur et « avec retour obligatoire simultané du reste » exclusivement, parmi les deux limites de son compte que nous avons déterminée par : 00,1€ la plus petite limite, qui sera due jusque à la plus grande limite, d'un total qui sera due des : 4,99€, à son compte.
Ces pièces de monnaie parmi les deux limites, auraient entretenue au compte dû, chaque consommateur et elles modifieraient exclusivement par de marchés ou encore par de retours- annulations, d' articles d'une consommation. Le consommateur qui a signé, sera informé encore pour, une médiation obligatoire et indispensable, de carte plastique d'une propriété de UNICEF, qu' il faut d'être posée à la caisse, pour sa contrôle par l'enregistreuse.
L'entretien par le consommateur de la preuve d'une caisse, est obligatoire, pour de nombreuses raisons. Étant donné, que en dehors, du contrôle, d'analyse et d'enregistrement des sommes de son marché, sera enregistré aussi le total payé plus bas, de la circulation des pièces de monnaie et le reste de son compte, que ce même consommateur doit, toujours à le contrôler. La dernière preuve enregistrée du traitement des pièces de monnaie est aussi de rigueur, pour le consommateur, particulièrement de son achat prochain, de sorte que soit au courant, pour les marges dû de son compte, que le consommateur lui-même doit à le contrôler. Encore étant donné que, le consommateur, lui même est et « le comptable », de son petit compte, il faut qu'il a «d'argent comptant», pour le remboursement de son achats, mais encore pour la raison qu' il ne recevra pas quiconque analyse périodique du mouvement de son compte, parce que cette possibilité est inacceptable par le programme de notre application, «pour de raisons de sécurité, mais encore pour une tenue sur son compte, qui est aussi «formellement inacceptable» sur ce compte du consommateur.
En conclusion, le consommateur « doit entretenir, toujours, la preuve dernière de ses achats, (comme et sa carte de UNICEF, qui est de rigueur), pour la circulation de son compte dû, pendant une provision d'articles d'une consommation fréquente , presque journalière et surtout dans les quartiers d'une cité.

2. «Un traitement des pièces de monnaie parmi deux limites exclusivement ».
2) Les deux limites que nous avons déterminées à prétention première ils seront embarrassée par les deux stops.
Le stop premier déterminera le total d'une valeur d'échange des 5€ exactement, qui aux transactions, détermine à un « billet de banque », qui ne deviendrait pas acceptable à l'archive observée des pièces de monnaie, et qui est évident.
Le stop deuxième, détermine l'inexistence d'une valeur, laquelle est formulée par le symbole numérique 0(zéro) et qui n'est pas possible de déterminer quelqu'une valeur d'échange.
Cependant, existe le cas qu'il aie résulté, (par les additions et les abstractions des pièces de monnaie seulement), l'un, ou l'autre stop, c'est- à - dire: le stop 5€ ou le stop 0(zéro), même qu'ils surviendraient rarement, de sorte qu'ils interrompent l'écoulement du traitement, parmi les limites de l'archive, que nous avons déterminée : 4,99€ et 0,01€, et en dépit de la volonté du consommateur.
Cependant, puisque le consommateur, bénéficiaire de la nouvelle carte de l'UNICEF, qui sera «présent, au-devant d'une caisse» toujours, et... (qui a accepté le traitement sans limites horaires pour le mouvement de son compte), sera décidé d'être, un intellectif compagnon de voyage, ou non, avec un véhicule, qui est cette carte nouvelle de UNICEF, sans autre procédure, il sera accepté un... cadeau, (qui a les pieds sur terre), par le ou la caissier, d'une valeur 0,01€, « cette valeur par qui sera forcé le compte dû, afin que ne soit pas annulé, le compte du consommateur. Cette valeur d'échange: 0,01€, qui pivote vers les deux limites, automatiquement, nous rappelons: «régulateur».
Dans les deux antérieurs cas, de dépassements des « limites », à chaque, n'importe quel «stop », le «régulateur, du traitement des pièces de monnaie», qui est sans limites d'une expiration» de chaque compte de pièces de monnaie, il interviendra automatiquement.
Ce régulateur, ci-dessus, représentera toujours, la valeur plus petite d'échange des pièces de monnaie: (00,1€) et qui sera, toujours, ajouté à l'un ou à l'autre stop en chaque cas.
Ce pièce de monnaie (00,1€) qui circule, entre les autres pièces de monnaie, est aussi utile, pour une avec précision, de la détermination d'une valeur d'échange, pendant les marchés des consommateurs.
Ce pièce de monnaie 00,1€, elle entreprendra à régulariser et à rétablir le circuit du total dans les deux limites des pièces de monnaie que nous avons déterminées et ne sera pas provoqué nihilisme du débiteur compte du consommateur à l'archive.
La intervention de ce petite valeur d'échange, qui sera automatique, elle sera compréhensible et particulièrement convenable et par tous les deux...consommateurs: «consommateur-le ou la caissier» et qui fonctionnera, grâce à son acceptation chaleureuse.
Ainsi en ajoutant, automatiquement, au compte dû de X consommateur de la valeur d'échange: 0,01€, son compte dû sera continuellement, dans les limites que nous avons déterminé. Cependant puisqu'il n'est pas permis que soit cet action théorique - mathématique, le consommateur présent toujours, à la caisse, encaissera la contre-valeur, de cette pièce de monnaie, (laquelle que sera) par le caissier, exclusivement.
Avec la même tactique, l'existence d'une valeur, d'un dû 0,01€, selon la entré de son compte à l'archive est obligatoire, (à condition que le consommateur ne fait pas d'usage), pendant de la même journée, de son compte dû.
« L'exportation du totale des restes dû, dans l'archive des consommateurs - le retour de la garantie - les codes de sûreté pendant les annulations , conformément à l'algorithme et leur apparition visuelle à l'écran, à forme de base, etc. nous croyons, qu'ils ne sont pas considérées revendications, à nôtre proposition».

## Revendications modifiées

### Revendications modifiées conformément à la règle 137(2) CBE.

**1.** Le premier élément arithmétique d'une valeur d'échange 0,01€, nous en appelons dans notre pétition : régulateur. Ce régulateur déterminera toujours, (ainsi que tous les éléments arithmétiques qui notre pétition détermine) une valeur échangeable. Ce régulateur se déplacera automatiquement, (lorsqu'il est nécessaire) et sera toujours ajouté à l'un des deux éléments qui seront non acceptables : le 0 (zéro) absence de valeur échangeable et le 5€ qui détermine une banque note.
Un autre élément arithmétique est la valeur échangeable 4,99€, qui comme le régulateur détermineront (limiteront) des sommes non payés (par pièces de monnaies toujours) dans la position d'un compte dû de chacun consommateur, l'un à la fin et l'autre au début du traitement des pièces de monnaie.
L'utilisation des deux éléments arithmétiques susmentionnés concernera des opérations d'achat des consommateurs et des éventuelles restitutions d'achats sortes impropres à la consommation ou même des annulations par les caissières d'une inscription erronée.
Pour les opérations d'achat, plus haut, la médiation de la carte UNICEF sera obligatoire.
Un comte dû sera crée pour le traitement des éléments arithmétiques, par chacun consommateur, qui sera garanti par le dépôt d'une « garantie » de 5€, «Non» opérationnelle : à savoir non modifiable lors du mouvement du compte dû du consommateur. Au contraire, dans le compte dû seront ajoutées, chaque fois les pièces de monnaie, jusqu'à ce qu'elles dépassent l'élément arithmétique (limite) de 4,99€. Dans ce cas de nouveau total, qui sera hors de la limite du montant, que nous avons déterminé de 4,99€, un montant de 5€, payé en billet de banque, par le consommateur sera incorporé dans la valeur de l'achat à verser à la caisse, par le consommateur, n'importe quelle, en billet de banque, tout en déduisant parallèlement du montant dû qui apparaîtra sur l'écran de la caisse, avant d'être incorporé dans le compte dû du consommateur qui sera enregistré et dans la preuve de la caisse. Ainsi le compte dû par le consommateur se trouvera toujours entre les deux limites déterminées. Pour l'opération rapide du traitement susmentionnée, nous avons programmé un algorithme, qui est noté dans le texte descriptif de notre proposition.
